# EUROPÄISCHE PATENTSCHRIFT

(11) **EP 1 537 340 B1**
(45) Veröffentlichungstag und Bekanntmachung des Hinweises auf die Patenterteilung: **07.11.2007**
(21) Anmeldenummer: 03776858.7
(22) Anmeldetag: 04.09.2003
(51) Int. Cl.: F16D 65/16

(54) **SCHEIBENBREMSE**
DISK BRAKE
FREIN A DISQUE

(30) Priorität: 12.09.2002 DE 10242397
(43) Veröffentlichungstag der Anmeldung: 08.06.2005
(73) Patentinhaber: Haldex Brake Products AB, S-261 24 Landskrona (SE)
(72) Erfinder: SEVERINSSON, Lars, S-310 27 Hishult (SE)
(74) Vertreter: Altenburg, Udo
(86) Internationale Anmeldenummer: PCT/EP2003/009820
(87) Internationale Veröffentlichungsnummer: WO 2004/027281

(56) Entgegenhaltungen:
- EP-A- 0 942 191
- DE-A- 4 032 885
- US-A- 5 547 048

## Beschreibung

Die vorliegende Erfindung betrifft eine Schreibenbremse für Fahrzeuge, insbesondere für Schwerlastfahrzeuge, mit einem in dem Bremssattel senkrecht zu der Ebene der Bremsscheibe verschieblich geführten und gegen die Bremsscheibe anstellbaren Schubglied. Das Schubglied wird mittels einer einen Drehhebel umfassenden Kraftübertragungseinrichtung gegen die Bremsscheibe bewegt.

Aus dem Stand der Technik sind unterschiedliche Konzepte zur Kraftübertragung von einem Drehhebel, der hydraulisch oder pneumatisch betätigt wird, auf ein Schubglied bzw. eine Traverse bekannt.

So ist beispielsweise aus der DE 20 57 322 C3 eine Betätigungsvorrichtung für eine Teilbelag-Scheibenbremse bekannt. Ein mechanisch betätigbarer Bremshebel ist mittels einer senkrecht und versetzt zur Achse des im Bremssattelgehäuse geführten Bremskolbens liegenden Welle drehbar gelagert. Zur Druckübertragung der mechanischen Betätigungskraft von dem Bremshebel auf das Schubglied bzw. den Bremskolben ist ein Wälzkörper in der Form einer zylindrischen Rolle vorgesehen, die in einander gegenüberliegenden Mulden in der Stirnseite des Schubglieds einerseits und im Bremshebel andererseits gehalten ist. Der Bremshebel selbst ist in einer halbzylindrischen Führungsbahn in einem Deckel des Bremssattels gelagert, wobei eine zylindrische Mulde dieser Führungsbahn radial und exzentrisch versetzt gegenüberliegt, in der die zylindrische Rolle eingepasst ist. An der gegenüberliegenden Seite ragt die zylindrische Rolle in eine Nut mit einer ebenen, parallel zu der Ebene der Bremsscheibe verlaufenden Fläche und stützt sich an dieser ab. Während der Betätigung wird die exzentrisch zur Führungsbahn in der Mulde des Bremshebels gleitend angeordnete Rolle in Richtung auf das Schubglied bewegt, wodurch dieses dann in Richtung auf die Bremsscheibe bewegt wird. Dabei wälzt sich die Rolle in der ebenen Nut des Schubglieds ab, wobei die Breite dieser Nut so bemessen ist, dass Querkräfte möglichst verhindert werden können.

Des Weiteren ist aus der DE 26 14 321 C3 bekannt, den Drehhebel einerseits an der der Bremsscheibe abgewandten Seite mit einer Wälzfläche, mit welcher diese sich an einer ebenen Widerlagerfläche des Bremssattels abstützt, und andererseits an der der Bremsscheibe zugewandten Seite mit einer Führungsbahn für eine Rolle zu versehen, welche wiederum an einer stirnseitigen, ebenen Fläche des Schubglieds bzw. eines Druckstößels rollfähig gelagert ist. Mit einer derartigen Anordnung soll ein großen Übersetzungsverhältnis zwischen dem Drehhebel und dem Schubglied erzielt werden. Der Drehhebel ist mittels einer Stiftlagerung am Bremssattel gelagert und die bremsscheibenseitige Führungsbahn weist eine derartige Kontur auf, dass über eine nockenartige Erhöhung im Verlauf der Führungsbahn eine verstärkte Kraftübertragung auf die Rolle und damit das Schubglied erfolgt.

Aus der DE 37 16 202 A1 ist es bekannt, zwischen einem Exzenterabschnitt des Drehhebels und einem Schubglied eine parallel zu der radialen Ebene der Bremsscheibe verlaufende Druckplatte vorzusehen, die über eine ebene Rollenlagerung an dem Schubglied abgestützt ist, wobei der Verschiebeweg der Druckplatte begrenzt ist. Der Exzenterabschnitt des Drehhebels ist an der der Druckplatte gegenüberliegenden Seite in dem Bremssattel mittels eines halbkreisförmigen Wälzlagers drehgelagert. Ein den Exzenterabschnitt des Drehhebels bildender, der Bremsscheibe zugewandter Nocken wälzt sich während der Bremsbetätigung auf der Druckplatte ab.

Bei einer weiteren aus dem Stand der Technik, der EP 0 553 105 B1, bekannten Zuspanneinrichtung einer Scheibenbremse ist zwischen einem Exzenterabschnitt des Drehhebels und dem Schubglied eine als Drehlagerung ausgebildete Lagerungsvorrichtung vorgesehen, die exzentrisch zu der Drehachse des Drehhebels diesen mit dem Schubglied koppelt. Ein Bolzen ist dabei in einander gegenüberliegenden, halbzylindrischen Ausnehmungen des Drehhebels einerseits und des Schubglieds andererseits aufgenommen, wobei der Drehhebel auf der bolzenabgewandten Seite gegen den Bremssattel durch ein halbkreisartiges Drehlager abgestützt ist. Die Kraftübertragung erfolgt bei dieser Zuspanneinrichtung derart, dass sich Bolzen, Exzenterabschnitt des Drehhebels und Schubglied relativ zueinander drehen. Der Bolzen ist zwischen den beiden Bauteilen, Drehhebel und Schubglied, ausschließlich drehend angeordnet, was bedingt, dass das Schubglied schwenkbar bzw. kippbar in dem Bremssattel gelagert sein muss. Dies ist jedoch mit Nachteil behaftet, dass bei Bremsbetätigung der Bremsbelag nicht exakt parallel an der Bremsscheibe abgestellt werden kann, was zu einem ungleichmäßigen Abtrieb führt.

Aus der EP 0 942 191 B1 ist es auch bekannt, den Exzenterabschnitt des Bremshebels bremsscheibenzugewandt über ein erstes radiales Segmentlager mit dem Schubglied und bremsscheibenabgewandt über ein zweites radiales Segmentlager mit einem fest mit dem Bremssattel verbundenen, rotationsförmigen Widerlager zu koppeln.

Die aus dem vorhergehenden beschriebenen Stand der Technik bekannten Ausgestaltungen und Mechanismen zur Kraftübertragung in einer Zuspanneinrichtung für Scheibenbremsen weisen die unterschiedlichsten Nachteilen auf.

So geht die beispielsweise aus der DE 20 57 322 C3 bekannte Gleitlagerung mittels eines Bolzens mit einer erhöhten Reibung einher, die gerade bei der extremen Kraftbelastung in Scheibenbremsen erheblich negative Auswirkungen hinsichtlich Verschleiß und Wirkungsgrad zeigt.

Um derartige Reibungs- und Verschleißerscheinungen zu vermeiden, ist im Stand der Technik, wie beispielsweise in der EP 0 553 105 B1 oder der EP 0 942 191 B1, der Einsatz von herkömmlichen Wälzlagern vorgesehen. Die aus diesem Stand der Technik bekannten Ausführungsformen weisen einen weiteren Nachteil jedoch dahingehend auf, dass zu einer einwandfreien Kraftübertragung das Schubglied bzw. die Traverse kippen muss, was, wie vorhergehend bereits erläutert, zu einer ungleichförmigen Anstellung des Bremsbelags an der Bremsscheibe und damit verbundenem ungleichförmigen Abrieb führt.

Grundsätzlich ist ein solches Kippen jedoch hinsichtlich der Kraftübertragung nicht erwünscht und wird lediglich in Kauf genommen. Um dies zu verhindern und gleichzeitig zur Vermeidung von Reibung, Verschleiß und Hysterese bedingten Querverschiebungen des Kraftübertragungsglieds auf das Schubglied bzw. die Traverse ist die Druckplatte gemäß der DE 37 16 202 A1 vorgeschlagen wurden. Der darin gezeigte Aufbau ist jedoch äußerst kompliziert und zeichnet sich durch erhöhte Kosten infolge der zusätzlich vorzusehenden und herzustellenden Bauteile aus.

Darüber hinaus ist allen Ausführungen einer Kraftübertragung in einer Zuspanneinheit für Scheibenbremsen aus dem Stand der Technik gemeinsam, dass die Kraftübertragung, bedingt durch den jeweils zur Anwendung kommenden Mechanismus, insbesondere deren Verlauf während des Einbrems- oder Lösevorgangs, nicht definiert gesteuert werden kann.

Ausgehend von den vorhergehend im Zusammenhang mit dem Stand der Technik geschilderten Nachteilen liegt der vorliegenden Erfindung die Aufgabe zu Grunde, eine Scheibenbremse der gattungsgemäßen Art derart weiterzubilden, dass ein Kraftübertragungsmechanismus in der darin zum Einsatz kommenden Zuspanneinheit vorgesehen wird, der die negativen Auswirkungen von Reibung und Verschleiß vermeidet, der einen besseren Wirkungsgrad und ein besseres Kraftübertragungsverhältnis aufweist und der in seinen Bauteilen einfach und kostengünstig herzustellen ist.

Darüber hinaus ist es eine Aufgabe der vorliegenden Erfindung, die Kraftübertragung in Abhängigkeit der zu berücksichtigenden Erfordernisse und konstruktiven Gegebenheiten definiert festzulegen. Insbesondere soll eine Progressivität der Kraftübertragung erzielt werden, d.h. mit einer im Vergleich zu Anfang des Einbremsvorgangs ansteigenden, größeren Bremskraft zu Ende des Einbremsvorgangs.

Gelöst wird die Aufgabe mit den Merkmalen des Patentanspruchs 1. Weitere Vorteile und Ausgestaltungen dieser Ausführungsformen gemäß der Erfindung ergeben sich aus den abhängigen Ansprüchen.

In einer Ausführungsform gemäß der Erfindung weist der Drehhebel an seinem dem Betätigungsende, an dem der Kolben eines pneumatischen oder hydraulischen Zylinders angreift, abgewandten Ende eine Lagerfläche auf, die um die Drehachse seiner Momentanlagerung zylindrisch nach außen gewölbt ist. Dieser zylindrischen Lagerfläche liegt eine Steuerfläche radial gegenüber derart, dass diese exzentrisch zu der Lagerfläche angeordnet ist. Die Steuerfläche weist eine konkav nach innen gewölbte Gestalt auf.

An der Steuerfläche liegt ein Rotationskörper, beispielsweise eine Walze, rollfähig an. Mit anderen Worten, der Rotationskörper vollführt bei der im Zuge der Kraftübertragung auftretenden Relativbewegungen an dieser Steuerfläche eine reine Rollbewegung, d.h. es tritt kein Gleiten oder Wälzen auf.

Der Drehhebel ist in zumindest einem radialen Segmentlager drehbar gelagert. Die Kraftübertragung auf ein Schubglied bzw. eine Traverse erfolgt gemäß der Erfindung durch die spezielle Anordnung der aus dem Drehhebel und dem Rotationskörper bestehenden Baueinheit. Diese Baueinheit liegt auf einer Seite an dem Schubglied und auf der anderen Seite an einer Stützfläche des Bremssattels an, so dass beim Verschwenken des Drehhebels in dem radialen Segmentlager und durch gegenseitiges Verlagern von Rotationskörper und Drehhebel das Schubglied in Richtung der Bremsscheibe verschoben wird.

Hierbei wandert der momentane Lagerpunkt der Drehachse des Drehhebels während der Schwenkbewegung auf seiner Drehebene kontinuierlich mit, d.h. in Richtung zur Bremsscheibe. Ebenfalls verändert sich dabei während der Schwenkbewegung die momentane Lage der fiktiven Drehachse der Steuerfläche, und zwar auf einer annähernden Kreisbahn. In der vorliegenden Ausführungsform ist der Drehhebel zwischen dem Rotationskörper und dem Schubglied quasi "schwimmend" gelagert, da er keine ortsfeste Drehachse aufweist.

Gemäß der Erfindung ist es dabei wesentlich, dass jedes einzelne Element der Steuerfläche des Drehhebels einen Krümmungsradius aufweist, der größer als der Radius des Rotationskörpers ist. Durch diese Ausgestaltung der Steuerfläche wird gewährleistet, dass der Rotationskörper an dieser Steuerfläche während der Bremsbetätigung eine reine Rollbewegung durchführt. Da durch diese reine Rollbewegung kein Gleiten oder Wälzen von beweglichen Bauteilen in der Zuspanneinrichtung auftritt, ist der Reibungsfaktor und der damit verbundene Verschleiß bei der Scheibenbremse gemäß der Erfindung zu vernachlässigen. Aus diesem Grund zeichnet sich die Kraftübertragung von dem Drehhebels auf das Schubglied bei einer derartigen Ausgestaltung durch eine erhöhte Effizienz und einen erhöhten Wirkungsgrad aus.

Aufgrund der Tatsache, dass dem Rotationskörper die Möglichkeit gegeben wird, sich bei Bremsbetätigung an einer Steuerfläche abzurollen, wird der nötige Freiheitsgrad zur Verfügung gestellt, der ein unnötiges Kippen des Schubglieds vermeidet, so dass diese streng axial geführt werden kann. Damit ist der Vorteil verbunden, dass durch dass ebene, parallele Anstellen des Bremsbelags an der Bremsscheibe kein ungleichförmiger Abrieb in Erscheinung tritt, wodurch der Verschleiß gering gehalten wird.

In einer weiteren Ausgestaltung dieser Ausführungsform gemäß der Erfindung ist die Steuerfläche derart ausgestaltet, dass der Krümmungsradius in jedem Element dieser Steuerfläche sich jeweils voneinander unterscheidet, d.h. dass kein Element existiert, das den gleichen Krümmungsradius wie ein anderes Element dieser Steuerfläche aufweist. Die einzelnen Krümmungsradien sind dabei so gewählt, dass sich die Steuerfläche zu ihren beiden Endseiten konkav aufweitet. Das Ausmaß der Ausweitung, welches durch die Wahl der einzelnen Krümmungsradien bestimmt wird, ist gemäß der Erfindung so gewählt, dass eine definierte Kraftübertragung bewerkstelligt werden kann, wenn der Rotationskörper auf dieser Steuerfläche abrollt.

Um eine progressive Kraftübertragung zu erreichen, bei der die auf die Bremsscheibe einwirkende Bremskraft am Ende des Einbremsvorgangs, d.h. bei nur noch geringem Hub des Schubglieds, größer ist als zu Anfang des Einbremsvorgangs, d.h. bei einem längerem Hub des Schubglieds in Richtung der Bremsscheibe, ist es vorgesehen, dass die Steuerfläche in ihrem unteren Abschnitt, gesehen vom Betätigungsende des Drehhebels, eine größere Aufweitung aufweist als in ihrem oberen Abschnitt. Der Rotationskörper rollt während der Schwenkbewegung des Drehhebels in der Steuerfläche in Richtung zu dem Betätigungsende bzw. in Richtung zum oberen Abschnitt dieser Steuerfläche ab. Daher wird mit fortschreitender Schwenkbewegung des Drehhebels im oberen Abschnitt der Steuerfläche zu Erzielung des gewünschten progressiven Verhaltens eine größere Kurvenneigung als in dem unterem Abschnitt, der dem Anfang der Bremsbetätigung entspricht, gefordert.

In einer weiteren vorteilhaften Ausgestaltung dieser Ausführungsform der Scheibenbremse gemäß der vorliegenden Erfindung ist der Rotationskörper an seiner der Steuerfläche des Drehhebels gegenüberliegenden Seite über ein zweites radiales Segmentlager drehbar gelagert.

Es wird deutlich, dass in dieser Ausgestaltung prinzipiell beide Betätigungsrichtungen denkbar sind. So ist es zum einen möglich, dass die Lagerfläche des Drehhebels über das erste radiale Segmentlager mit dem Schubglied und folglich der Rotationskörper über das zweite radiale Segmentlager mit dem Bremssattel gekoppelt ist. Zum anderem ist es jedoch auch denkbar, dass die Lagerfläche des Drehhebels über das erste radiale Segmentlager mit dem Bremssattel und dann der Rotationskörper über das zweite radiale Segmentlager mit dem Schubglied gekoppelt ist. Mit anderen Worten, die Reihenfolge der einzelnen Komponenten der aus erstem radialen Segmentlager, Drehhebel, Rotationskörper und zweitem radialen Segmentlager bestehenden Baueinheit wird hinsichtlich der Betätigungsrichtung zwischen dem Schubglied und dem Bremssattel umgekehrt.

In einer weiteren Ausgestaltung der Scheibenbremse gemäß der Erfindung ist zumindest eine Klammer vorgesehen, deren bremsscheibenabgewandtes Ende eine Lagerschale für eines dieser radialen Segmentlager bildet. Die Klammer steht mit einem Deckel in Eingriff, der dazu dient, eine Öffnung in dem Bremssattel zu verschließen, der in diesem in seiner der bremsscheibezugewandten Seite vorgesehen ist und durch welche Komponenten der Zuspanneinheit während der Montage eingeführt werden können. Da sich das Schubglied zusätzlich über eine Feder an diesem Deckel abstützt, lässt sich über die Ausgestaltung mit zumindest einer Klammer die gesamte Zuspanneinheit zusammenhalten.

In einer weiteren vorteilhaften Ausgestaltung weist die Zuspanneinheit zwei Klammern auf, zwischen denen der Drehhebel freibeweglich angeordnet ist, und die das Schubglied vollständig auf seiner Oberseite und Unterseite sowie seinem rückwärtigen Teil umschließen.

Das Schubglied kann ein einzelner Druckstößel sein. Jedoch ist gemäß der Erfindung auch eine Traverse als Schubglied vorgesehen, in der zwei parallel verlaufende Nachstellspindeln angeordnet sind. Zwischen der Traverse und dem Deckel ist ein Zahnradgetriebe angeordnet, das eine beliebige Ausgestaltung aufweisen kann, und dazu dient, die Nachstellspindeln miteinander zu synchronisieren.

In einer weiteren, jedoch nicht unter den Schutzumfang der Ansprüche fallenden Ausführungsform einer Scheibenbremse bzw. Zuspanneinheit weist der Drehhebel eine erste Lagerfläche auf, die zylindrisch um dessen Drehachse nach außen gewölbt ist. Dieser ersten Lagerfläche radial gegenüberliegend ist eine ebenfalls zylindrisch geformte zweite Lagerfläche vorgesehen, die nach innen gewölbt ist und zu der ersten Lagerfläche exzentrisch versetzt angeordnet ist.

Ein Rotationskörper ist in dieser Ausführungsform in der zweiten Lagerfläche drehbar gelagert und liegt an seiner dieser zweiten Lagerfläche gegenüberliegenden Seite an einer ebenen Steuerfläche rollfähig an. Auch hier erfolgt während der Kraftübertragung beim Einbremsen kein Gleiten oder Wälzen des Rotationskörpers an dieser Steuerfläche.

An der ersten zylindrischen Lagerfläche befindet sich außenseitig ein erstes radiales Segmentlager und an der zweiten zylindrischen Lagerfläche innenseitig ein zweite radiales Segmentlager.

Die Kraftübertragung erfolgt derart, dass die aus dem Drehhebel und Rotationskörper bestehende Baueinheit zwischen dem Schubglied und dem Bremssattel an diesen anliegend derart angeordnet ist, dass beim Verschwenken des Drehhebels zwischen dem ersten radialen Segmentlager und dem zweiten radialen Segmentlager einerseits und durch dadurch hervorgerufenes Abrollen des Rotationskörpers an der Steuerfläche andererseits das Schubglied verschoben wird.

Auch in dieser Ausführungsform sind prinzipiell zwei verschiedene Varianten möglich.

So kann einerseits der Bremssattel die ebene Steuerfläche aufweisen, was bedingt, dass dann die erste Lagerfläche über das erste radiale Segmentlager mit dem Schubglied und der Rotationskörper über das zweite radiale Segmentlager mit dem Drehhebel gekoppelt ist.

Es ist jedoch auch denkbar, dass wiederum die Reihenfolge der einzelnen Komponenten der aus erstem radialen Segmentlager, zweitem radialen Segmentlager, Drehhebel und Rotationskörper bestehenden Baueinheit in Betätigungsrichtung umgekehrt wird, so dass das Schubglied die Steuerfläche entsprechend aufweist und dann die erste Lagerfläche über das erste radiale Segmentlager mit dem Bremssattel und der Rotationskörper über das zweite radiale Segmentlager mit dem Drehhebel gekoppelt ist.

Beide Ausführungsformen der Scheibenbremse zeichnen sich dadurch aus, dass sie eine einfache Funktionsweise aufweisen, die sich darüber hinaus mit einfachen, handelsüblichen Bauteilen bewerkstelligen lässt.

Weitere vorteilhafte Ausgestaltungen und Merkmale der erfindungsgemäßen Scheibenbremse ergeben sich aus den im Zusammenhang mit den beiliegenden Zeichnungen dargestellten Ausführungsbeispiele. Es zeigen
- Fig. 1: eine schematische Darstellung einer Ausführungsform der Kraftübertragungseinheit gemäß der Erfindung in einer Betätigungsrichtung;
- Fig. 2: eine schematische Darstellung dieser Kraftübertragungseinheit in einer entgegengesetzten Betätigungsrichtung;
- Fig. 3: eine perspektivische Darstellung der zusammengebauten Zuspanneinheit in der ersten Ausführungsform der Erfindung;
- Fig. 4: eine Schnittdarstellung entlang A-A aus Fig. 3;
- Fig. 5: eine schematische Darstellung der Kraftübertragungseinheit einer weiteren, jedoch nicht erfindungsgemäßen Kraftübertragungseinheit in einer Betätigungsrichtung; und
- Fig. 6: eine schematische Darstellung dieser Kraftübertragungseinheit in einer entgegengesetzten Betätigungsrichtung.

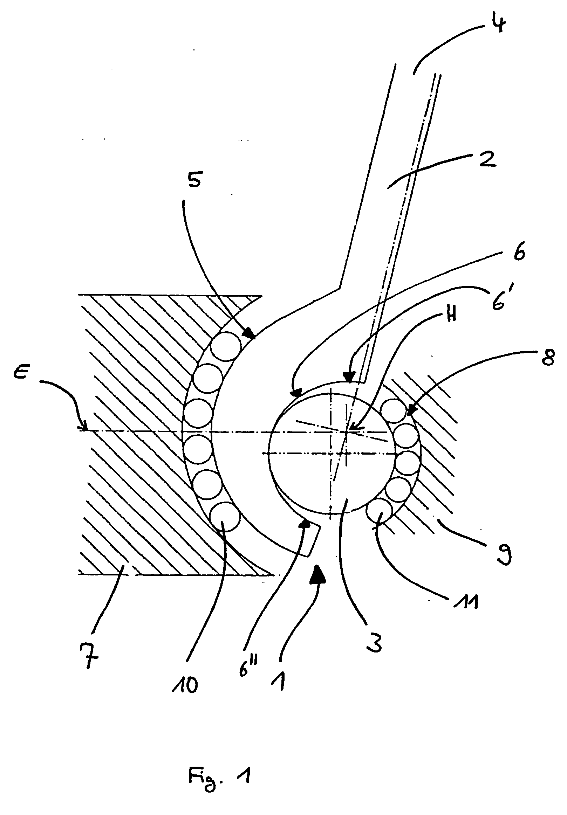

Fig. 1 gibt eine schematische Darstellung der Baueinheit 1 zur Kraftübertragung zwischen einem Bremskrafterzeugungsglied, wie beispielsweise einem hier nicht gezeigten hydraulischen Zylinder, und dem Glied zur Übertragung der Bremskraft an der Bremsscheibe wieder.

Die Baueinheit 1 besteht im Wesentlichen aus einem Drehhebel 2 und einem Rotationskörper 3.

Der Drehhebel 2 weist an demjenigen Ende, welches seinem Betätigungsende 4, an dem beispielsweise die Kolbenstange des hydraulischen Zylinders angreift, abgewandt ist, eine erste Lagerfläche 5 auf. Diese Lagerfläche 5 ist zylindrisch nach außen gewölbt.

Dieser ersten Lagerfläche 5 liegt eine Steuerfläche 6 radial gegenüber. Die Steuerfläche 6 ist einerseits exzentrisch zu der ersten Lagerfläche 5 angeordnet und weist andererseits eine nach innen gewölbt konkave Gestalt auf.

An der Steuerfläche 6 liegt der Rotationskörper 3 rollfähig an, d.h. während der Bremsbetätigung und des Schwenkens des Drehhebels 2 vollführt der Rotationskörper 3 an dieser Steuerfläche 6 eine reine Rollbewegung ohne dabei zu gleiten oder abzuwälzen.

Mit anderen Worten, die Steuerfläche 6 ist dergestalt, dass zwischen einer Zylinderfläche des Rotationsköpers 3 und dieser Steuerfläche 6 stets Kontakt in nur einem Punkt (Element) bzw. in einer Linie vorherrscht. Zu diesem Zweck ist gemäß der Erfindung der Radius des Rotationsköpers 3 stets kleiner als ein jeweiliger Krümmungsradius der Steuerfläche 6 in jedem einzelnen Element.

Die aus Drehhebel 2 und Rotationskörper 3 bestehenden Baueinheit 1 ist zwischen einem Schubglied 7, welches der Übertragung der Bremskraft auf die Bremsscheibe dient, und einer diesem Schubglied 7 gegenüberliegenden Stützfläche 8 eines Bremssattels 9 angeordnet.

Dabei ist der Drehhebel 2 "schwimmend" gelagert derart, dass sich die momentane Lage seiner Drehachse H kontinuierlich während dessen Verschwenkens und damit während des Verschiebens des Schubglieds 7 auf einer Drehebene E, die senkrecht zu der Ebene der Bremsscheibe verläuft, ändert. Die Drehachse H vollführt eine Bewegung auf der Drehebene E zusammen mit dem Schubglied 7 in Richtung zur Bremsscheibe.

Bei der in Fig. 1 gezeigten Ausführungsform befindet sich das Schubglied 7 in der linken Seite, d.h. die Betätigungsrichtung beim Verschwenken des Drehhebels 2 nach links ist ebenfalls nach links in dieser Fig. 1 gerichtet.

Die Lagerfläche 5 des Drehhebels 2 ist über ein radiales Segmentlager 10 mit dem Schubglied 7 gekoppelt. Diesem gegenüberliegend ist der Rotationskörper 3 über ein zweites radiales Segmentlager 11 an der Stützfläche 8 des Bremssattels 9 drehbar gelagert.

Wie in der Fig. 1 zu erkennen ist, weitet sich die Steuerfläche 6, bezogen auf die Zylinderfläche des Rotationskörpers 3, zu beiden Seiten des Berührungspunktes zwischen der Steuerfläche 6 und der Zylinderfläche des Rotationskörpers 3 in einer Ruhestellung des Drehhebels 2, konkav auf. Dabei ist gemäß der Erfindung der jeweilige Krümmungsradius so gewählt, und zwar in Abhängigkeit des gewünschten Kraftverlaufs der Bremskraft während des Einbrems- bzw. Lösevorgangs, dass er in jedem Element der Steuerfläche 6 unterschiedlich ist.

Um beispielsweise eine progressive Charakteristik der Bremskraft während des Einbremsens zu erreichen, d.h. die Bremskraft soll zu Ende des Bremsvorgangs größer sein als zu Beginn des Bremsvorgangs, ist die Steuerfläche 6 derart geformt, dass sie in ihrem unterem Abschnitt 6" eine größere Ausweitung als in ihrem oberen Abschnitt 6' aufweist. Dadurch wird bewirkt, dass zu Ende des Bremsvorgangs das Schubglied 7 beim Verschwenken des Drehhebels 2 in dem radialen Segmentlager 10 und während des exzentrischen gegenseitigen Verlagems von Drehhebel 2 und Rotationskörper 3, welcher an auf diesen Abschnitt 6' der Steuerfläche 6 aufrollt, einen größeren Druck ausüben kann.

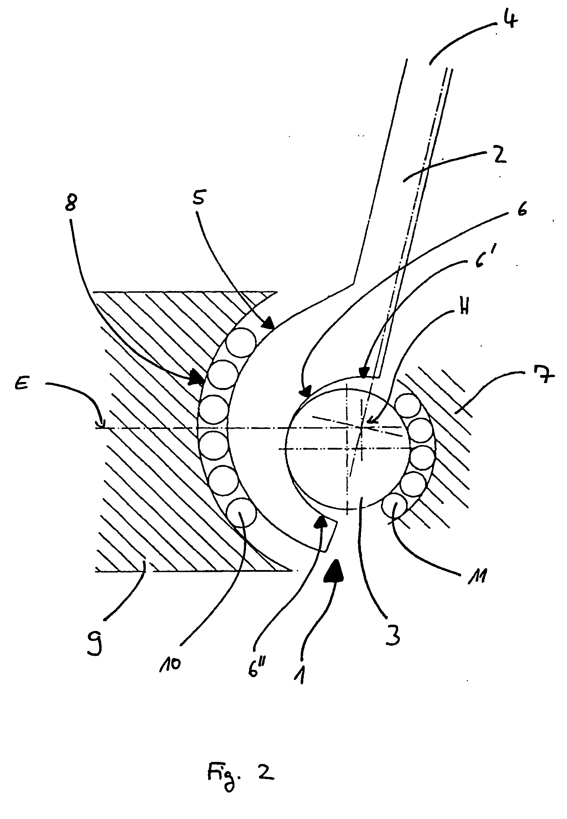

Die aus Drehhebel 2 und Rotationskörper 3 bestehende Baueinheit 1 kann jedoch auch mit umgekehrter Richtung seiner Komponenten zwischen dem Schubglied 7 und dem Bremssattel 9 angeordnet werden. Eine solche Vatiante dieser Ausführungsform zeigt schematisch die Fig. 2. In dieser wird das Schubglied 7, das sich in der rechten Seite der Fig. 2 befindet, beim Verschwenken des Drehhebels 2 nach links, in die entgegengesetzte Richtung nach rechts bewegt. Zu diesem Zweck steht der Drehhebel 2 über das erste radiale Segmentlager 10 mit dem Bremssattel 9 und der Rotationskörper 3 an seiner der Steuerfläche 6 gegenüberliegenden Seite über das zweite radiale Segmentlager 11 mit dem Schubglied 7 in Verbindung.

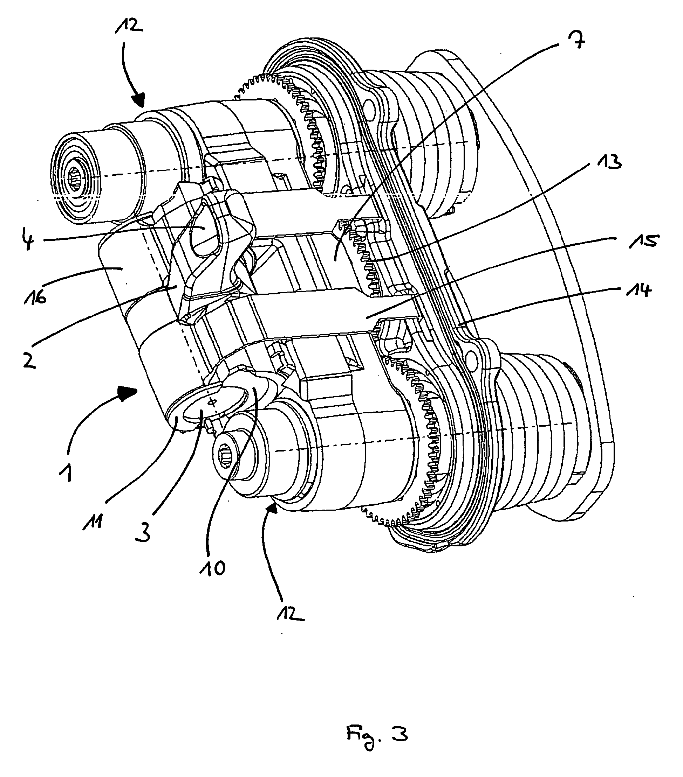

In Fig. 3 ist die Zuspanneinheit, die die Ausführungsform nach Fig. 1 beinhaltet, perspektivisch dargestellt. Das Schubglied 7 ist in der Form einer Traverse ausgebildet, welche mit zwei Nachstellspindeln 12 versehen ist. Die Nachstellspindeln 12 sind über ein Zahnradgetriebe 13 miteinander synchronisiert.

Das Zahnradgetriebe 12 befindet sich zwischen dem Schubglied 7 und einem Deckel 14 angeordnet, der zum Verschließen einer Öffnung in einem bremsscheibenseitigen Abschnitt des Bremssattels 9 dient.

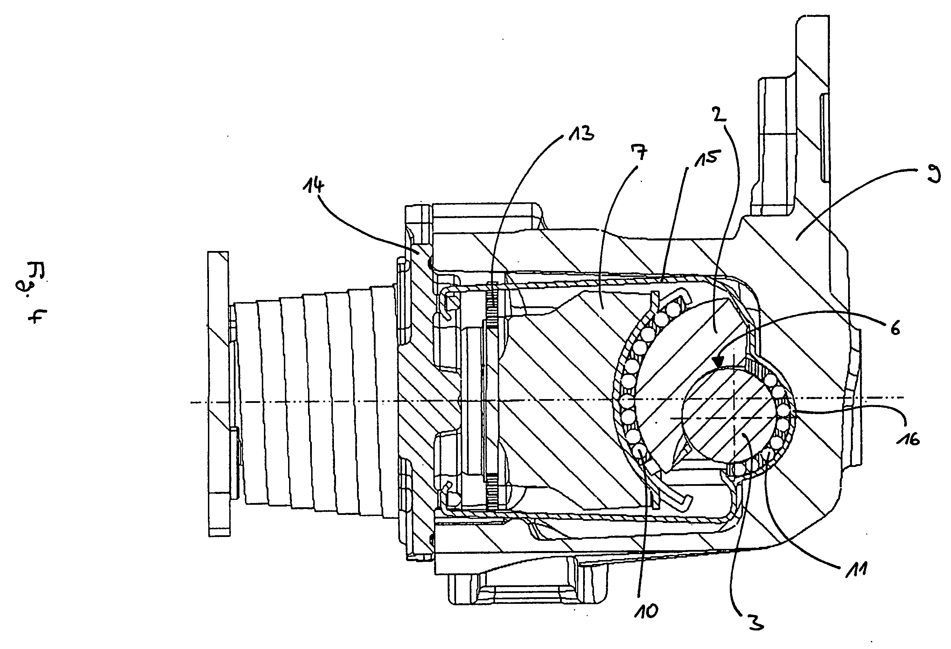

Fig. 4 zeigt einen Schnitt entlang A-A aus Fig. 3. Eine Klammer 15 steht mit dem Deckel 14 derart in Eingriff, dass sie das Schubglied 7 und die aus Drehhebel 2 und Rotationskörper 3 bestehende Baueinheit 1 umschließt. Dabei weist die Klammer 15 eine Lagerschale 16 des zweiten radialen Segmentlagers 11 auf.

Gemäß einer Ausgestaltung der Erfindung, die in Fig. 3 dargestellt ist, weist die Zuspanneinheit der Scheibenbremse zwei Klammern 15 auf, die um die Traverse 7 so angeordnet sind, dass sie in ihrer Mitte den Drehhebel 2 einschließen. Mittels der Klammern 15 ist es möglich, die aus Schubglied 7, radialen Segmentlagem 10, 11, Drehhebel 2, Rotationskörper 3, synchronisierendes Zahnradgetriebe 13 und aus dem Deckel 14, sowie gegebenenfalls aus weiteren Komponenten bestehende Baueinheit, zu Zwecken einer besseren Montage zusammenzuhalten.

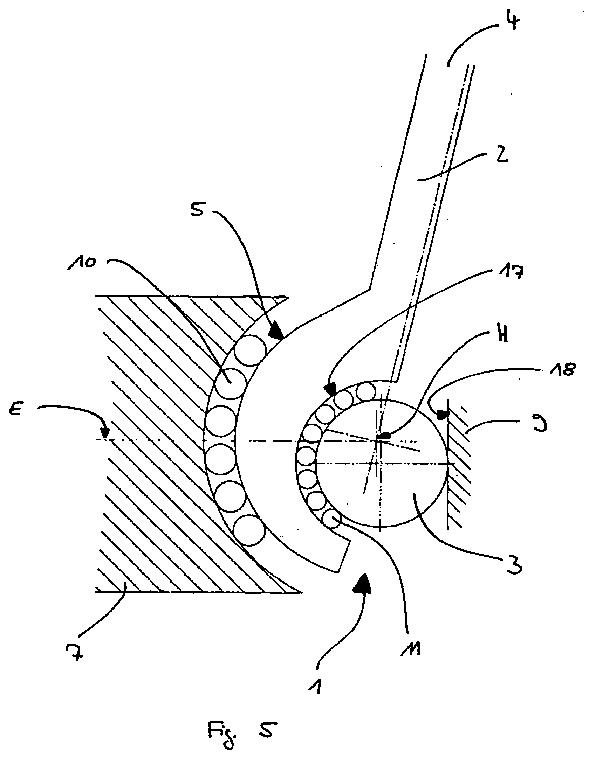

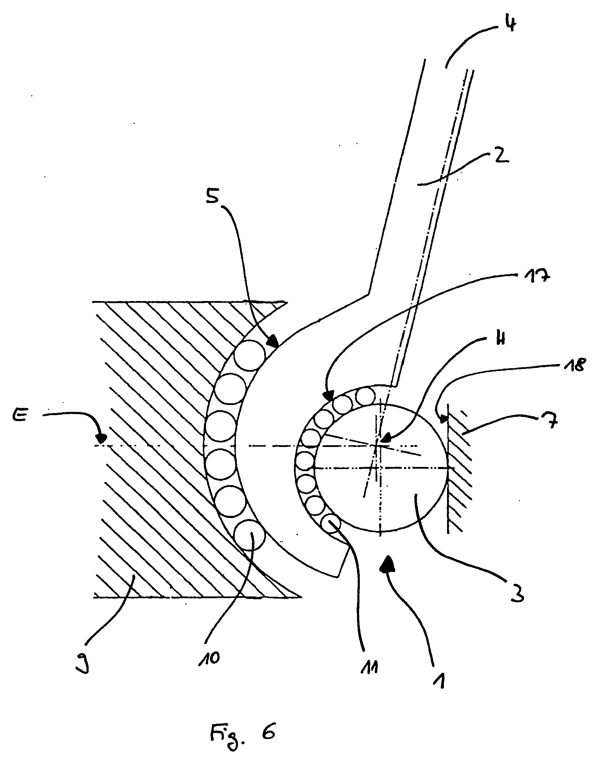

Die Fig. 5 und 6 zeigen schematisch eine weitere, jedoch nicht erfindungsgemäße Ausführungsform einer Kraftübertragungseinheit, wobei identische Bauteile mit gleichem Bezugszeichen versehen sind.

In diesen Fig. 5 und 6 ist ebenfalls eine Baueinheit 1 gezeigt, die die wesentlichen Bestandteile eines Drehhebels 2 und eines Rotationskörpers 3 umfasst.

Der Drehhebel 2 weist an seinem Betätigungsende 4 gegenüberliegenden Ende eine erste Lagerfläche 5 auf, die zylindrisch nach außen gewölbt ist. Dieser ersten Lagerfläche 5 radial und dazu exzentrisch versetzt gegenüberliegend weist der Drehhebel 2 eine zweite Lagerfläche 17 auf, die nach innen gewölbt ist und ebenfalls eine zylindrische Form besitzt.

An der dieser Lagerfläche 17 gegenüberliegenden Seite liegt der Rotationskörper 3 an einer ebenen Steuerfläche 18 rollfähig an, d.h. beim Einbremsen vollführt dieser Rotationskörper 3 an der ebenen Steuerfläche 18 eine reine Rollbewegung. Zwischen der Zylinderfläche des Rotationskörpers 3 und der Steuerfläche 18 liegt eine reine Linienberührung vor.

Die ebene Steuerfläche 18 ist im Wesentlichen parallel zu der Ebene der Bremsscheibe bzw. im Wesentlichen senkrecht zu der Betätigungsrichtung des Schubglieds 7.

In der in Fig. 5 gezeigten Variante befindet sich das Schubglied 7 links, so dass der Drehhebel 2 über das erste radiale Segmentlager 10 mit dem Schubglied 7 und der Rotationskörper 3 über das zweite radiale Segmentlager 11 mit dem Drehhebel 2 gekoppelt ist. Die Betätigungsrichtung beim Verschwenken des Drehhebels 2 nach links ist demzufolge in Fig. 5 ebenfalls nach links gerichtet.

Es ist jedoch auch vorgesehen, die Reihenfolge der Komponenten der Baueinheit 1 wiederum umzukehren, so dass der Drehhebel 2 über das erste radiale Segmentlager 10 mit dem Bremssattel 9 und der Rotationskörper 3 über das zweite radiale Segmentlager 11 mit dem Drehhebel 2 gekoppelt ist. Bei dieser Ausführungsform weist das Schubglied 7 die ebene Steuerfläche 18 auf, d.h. die Betätigungsrichtung ist in Fig. 6 nach rechts gerichtet, während der Drehhebel 2 nach links verschwenkt wird.

Es wird deutlich, dass mittels der Kraftübertragungseinheit 1 aus Drehhebel 2 und Rotationskörper 3 eine Möglichkeit geschaffen wird, eine einfache und kostengünstige Baueinheit zu realisieren, bei der die negativen Auswirkungen der Gleitreibung vermieden werden. Darüber hinaus ermöglicht die spezielle Kombination einer verlaufsdefinierten Steuerfläche 6 bzw. 18 mit einem daran rollfähig anliegenden Rotationskörper 3 eine definiertes Festlegen des Kraftverlaufs während des Einbremsens bzw. Lösen der Bremse.

## Patentansprüche

1. Scheibenbremse mit einem eine Bremsscheibe umfassenden Bremssattel (9), mit einem in dem Bremssattel (9) senkrecht zur Ebene der Bremsscheibe verschieblich geführten und gegen die Bremsscheibe anstellbaren Schubglied (7), mit einer Zuspanneinrichtung, umfassend einen Drehhebel (2), der zur Drehung in einer senkrecht zur Ebene der Bremsscheibe verlaufenden Ebene (E) um eine Drehachse (H) in einem ersten radialen Segmentlager (10) drehbar ist und an seinem dem Betätigungsende (4) abgewandten Ende mit einer zylindrisch um die Drehachse (H) nach außen gewölbten Lagerfläche (5) und dieser radial gegenüberliegend mit einer exzentrisch zu dieser Lagerfläche (5) angeordneten konkav nach innen gewölbten Steuerfläche (6) versehen ist,
und mit einem rollfähig an der Steuerfläche (6) anliegenden Rotationskörper (3), der in einem zweiten radialen Segmentlager (11) drehbar ist, wobei jedes Element der Steuerfläche (6) einen Krümmungsradius aufweist, der größer als der Radius des Rotationskörpers (3) ist, wobei die aus Drehhebel (2) und Rotationskörper (3) bestehende Baueinheit (1) zwischen dem Schubglied (7) und einer zylindrischen Stützfläche (8) des Bremssattels (9) an diesen anliegend derart angeordnet ist, dass beim Verschwenken des Drehhebels (2) in dem radialen Segmentlager (10) und durch gegenseitiges Verlagern von Rotationskörper (3) und Drehhebel (2) das Schubglied (7) verschoben wird, wobei sich die Lage der Drehachse (H) des Drehhebels (2) während des Verschiebens des Schubglieds (7) verändert.

2. Scheibenbremse nach Anspruch 1, **dadurch gekennzeichnet, dass** der Krümmungsradius in jedem Element der Steuerfläche (6) unterschiedlich ist derart, dass sich die Steuerfläche (6) konkav aufweitet.

3. Scheibenbremse nach Anspruch 2, **dadurch gekennzeichnet, dass** die Steuerfläche (6) in einem ersten Abschnitt (6") eine größere Aufweitung aufweist als in einem zweiten Abschnitt (6').

4. Scheibenbremse nach einem der Ansprüche 1 bis 3, **dadurch gekennzeichnet, dass** die Lagerfläche (5) über das erste radiale Segmentlager (10) mit dem Schubglied (7) und der Rotationskörper (3) an seiner der Steuerfläche (6) gegenüberliegenden Seite über das zweite radiale Segmentlager (11) mit dem Bremssattel (9) gekoppelt ist.

5. Scheibenbremse nach Anspruch 4, **dadurch gekennzeichnet, dass** eine Klammer (15), die mit einem Deckel (14) in Eingriff steht, der eine Öffnung in dem Bremssattel (9) an seiner der Bremsscheibe zugewandten Seite verschließt, eine Lagerschale (16) des zweiten radialen Segmentlagers (11) aufweist.

6. Scheibenbremse nach Anspruch 5, **dadurch gekennzeichnet, dass** zwei Klammern (15) den Drehhebel (2) zu seinen beiden Seiten einschließen.

7. Scheibenbremse nach einem der Ansprüche 1 bis 3, **dadurch gekennzeichnet, dass** die Lagerfläche (5) über das erste radiale Segmentlager (10) mit dem Bremssattel (9) und der Rotationskörper (3) an seiner der Steuerfläche (6) gegenüberliegenden Seite über das zweite radiale Segmentlager (11) mit dem Schubglied (7) gekoppelt ist.

8. Scheibenbremse nach einem der vorhergehenden Ansprüche, **dadurch gekennzeichnet, dass** das Schubglied (7) in der Form einer Traverse ausgebildet ist, die zwei Nachstellspindeln (12) aufweist.

9. Scheibenbremse nach Anspruch 8, **dadurch gekennzeichnet, dass** die Nachstellspindeln (12) über ein Zahnradgetriebe (13) miteinander gekoppelt sind, das zwischen einem Deckel (14) und dem Schubglied (7) angeordnet ist.

## Claims

1. A disk brake with a brake caliper (9) comprising a brake disk, a sliding member (7) which can be displaced in a vertical manner in relation to the surface of the brake disk in the brake caliper (9) and can be engaged against the brake disk, and a clamping device comprising a rotary lever (2) which can rotate around a rotational axis (H) in a first radial segment bearing (10) to turn in a rotational surface (E) running vertical to the surface of the brake disk, and which is equipped on its end turned away from the activation end (4) with a bearing surface (5) domed outward that is cylindrical and surrounds the rotational axis (H) and, situated radially opposite and eccentric to the bearing surface (5) with a control surface (6), domed inward in concave manner, and having a rotational body (3) with rotary capacity in contact with the control surface (6) which can rotate in a second radial segment bearing (11), wherein every element of the control surface (6) has a curvature radius greater than the radius of the rotational body (3), and the construction unit (1) consisting of the rotary lever (2) and rotational body (3) is positioned between the sliding member (7) and a cylindrical supporting surface (8) of the brake caliper (9) in contact with it, in such a way that, when the rotary lever (2) pivots in the radial segment bearing (10), by means of reciprocal displacement of the rotational body (3) and the rotary lever (2), the sliding member (7) is displaced so that the position of the rotational axis (H) of the rotary lever (2) changes during the displacement of the sliding member (7).

2. A disk brake according to claim 1, distinguished in that the curvature radius is different in every element of the control surface (6) in such a way that the control surface (6) widens in concave manner.

3. A disk brake according to claim 2, distinguished in that the control surface (6) has a grater widening in its lower section (6") than in its upper section (6').

4. A disk brake according to any one of claims 1 to 3, distinguished in that the bearing surface (5) is coupled with the sliding member (7) by means of the first radial segment bearing (10) and the rotational body (3) on its side opposite the control surface (6) is coupled with the brake caliper (9) by means of the second radial segment bearing (11).

5. A disk brake according to claim 4, distinguished in that a brace (15) that is engaged with a cap (14), which closes an opening in the brake caliper (9) on its side toward the brake disk, has a bearing box (16) of the second radial segment bearing (11).

6. A disk brake according to claim 5, distinguished in that two braces (15) surround the rotary lever (2) on both of its sides.

7. A disk brake according to any one of claims 1 to 3, distinguished in that the bearing surface (5) is coupled with the brake caliper (9) by means of the first radial segment bearing (10) and the rotational body (3) on its side opposite the control surface (6) is coupled with the sliding member (7) by means of the second radial segment bearing (11).

8. A disk brake according to any of the foregoing claims, distinguished in that the sliding member (7) is configured in the shape of a cross bar that has two adjustment spindles (12).

9. A disk brake according to claim 8, distinguished in that the adjustment spindles (12) are coupled with one another by means of a gear wheel mechanism (13) which is positioned between the cap (14) and the sliding member (7).

## Revendications

1. Frein à disque comportant un étrier de frein (9) comprenant un disque de frein, un élément de poussée (7) guidé de façon mobile dans l'étrier de frein (9) perpendiculairement au plan du disque de frein, un dispositif de serrage par traction, comprenant un levier pivotant (2) qui, pour la rotation dans un plan (E) s'étendant perpendiculairement au plan du disque de frein, peut tourner autour d'un axe de rotation (H) dans un premier palier à segments radial (10) et est muni, à son extrémité opposée à l'extrémité d'actionnement (4), d'une surface d'appui (5) bombée vers l'extérieur de manière cylindrique autour de l'axe de rotation (H) et, opposée à celle-ci radialement, d'une surface de commande (6) disposée de manière excentrée par rapport à cette surface d'appui (5) et bombée de façon concave vers l'intérieur,
et un corps de rotation (3) contigu à la surface de commande (6) de manière à pouvoir rouler et pouvant tourner dans un deuxième palier à segments radial (11), chaque élément de la surface de commande (6) présentant un rayon de courbure qui est plus grand que le rayon du corps de rotation (3), l'unité de construction (1) constituée du levier pivotant (2) et du corps de rotation (3) étant disposée entre l'élément de poussée (7) et une surface de support (8) cylindrique de l'étrier de frein (9) de manière contiguë à celui-ci, de telle sorte que l'élément de poussée (7) est déplacé lors du pivotement du levier pivotant (2) dans le palier à segments radial (10) et par déplacement réciproque du corps de rotation (3) et du levier pivotant (2), la position de l'axe de rotation (H) du levier pivotant (2) se modifiant pendant le déplacement de l'élément de poussée (7).

2. Frein à disque selon la revendication 1, **caractérisé en ce que** le rayon de courbure est différent dans chaque élément de la surface de commande (6), de telle manière que la surface de commande (6) s'élargit de manière concave.

3. Frein à disque selon la revendication 2, **caractérisé en ce que** la surface de commande (6) présente, dans une première section (6"), un élargissement plus grand que dans une deuxième section (6').

4. Frein à disque selon l'une des revendications 1 à 3, **caractérisé en ce que** la surface d'appui (5) est couplée avec l'élément de poussée (7) par l'intermédiaire du premier palier à segments radial (10) et le corps de rotation (3) est couplé, sur son côté opposé à la surface de commande (6), à l'étrier de frein (9) par l'intermédiaire du deuxième palier à segments radial (11).

5. Frein à disque selon la revendication 4, **caractérisé en ce qu'**une pince (15) en prise avec un couvercle (14) qui ferme une ouverture dans l'étrier de frein (9) sur son côté tourné vers le disque de frein, présente un coussinet de palier (16) du deuxième palier à segments radial (11).

6. Disque de frein selon la revendication 5, **caractérisé en ce que** deux pinces (15) enferment le levier de rotation (2) sur ses deux côtés.

7. Frein à disque selon l'une des revendications 1 à 3, **caractérisé en ce que** la surface d'appui (5) est couplée avec l'étrier de frein (9) par l'intermédiaire du premier palier à segments radial (10) et le corps de rotation (3) est couplé, sur son côté opposé à la surface de commande (6), à l'élément de poussée (7) par l'intermédiaire du deuxième palier à segments radial (11).

8. Frein à disque selon l'une quelconque des revendications précédentes, **caractérisé en ce que** l'élément de poussée (7) est réalisé sous la forme d'une traverse qui présente deux tiges de réglage (12).

9. Frein à disque selon la revendication 8, **caractérisé en ce que** les tiges de réglage (12) sont couplées entre elles par l'intermédiaire d'un engrenage (13) qui est disposé entre un couvercle (14) et l'élément de poussée (7).
